# EUROPEAN PATENT APPLICATION

(11) **EP 2 014 524 A1**
(43) Date of publication of application: **14.01.2009**
(21) Application number: 08160127.0
(22) Date of filing: 10.07.2008
(51) Int. Cl.: B60R 25/04, B60K 28/10

(54) **Control device and method**

(30) Priority: 11.07.2007 JP 2007181714
(71) Applicant: Omron Corporation, Kyoto-shi, Kyoto 600-8530 (JP)
(72) Inventor: Hayama, Kosuke, Kyoto Kyoto 600-8530 (JP); Ichiyanagi, Hoshibumi, Kyoto Kyoto 600-8530 (JP); Satoh, Yasuhiro, Kyoto Kyoto 600-8530 (JP); Kawashima, Hidemitsu, Kyoto Kyoto 600-8530 (JP)
(74) Representative: Brykman, Georges

(57) **Abstract**

An engine of a vehicle is to be started by only a simple operation. For example, when judging that the shift position is moved from "P" to another position, ECU (12) transmits "request" for certifying a portable electronic key (11) in the form of LF. When receiving UHF as "answer", ECU (12) outputs an engine start permitting signal. Accordingly, the engine start processing is finished, and the engine of the vehicle is started in response to output of the engine start permitting signal. The present invention is applicable to an antitheft system of a vehicle.

## Description

### BACKGROUND OF THE INVENTION

### 1. Field of the Invention

The present invention relates to control device and method, and particularly to control device and method that can start the engine of an vehicle by only a simple operation.

### 2. Description of Related Art

A conventional antitheft system for a vehicle comprises ECU (Electronic Control Unit: Electronic Control Unit) mounted in a vehicle, and a portable electronic key which is carried by a user who drives the vehicle (see JP-A-2003-20835 and JP-A-09-279917 (Patent Documents 1 and 2, for example)).

In this case, ECU carries out certification communication with a portable electronic key, and for example it executes the processing necessary to start the engine of a vehicle when the certification concerned succeeds.

However, in order to start the engine, a user (driver) has been hitherto required to carry out a cumbersome operation such as an operation of a key cylinder, a press operation of an engine starting switch or the like. Therefore, it has been recently required to start the engine by a further simple operation.

### SUMMARY OF THE INVENTION

The present invention has been implemented in view of such a situation, and enables start of the engine of a vehicle by only a simple operation.

According to an aspect of the present invention, a control device mounted in a vehicle which carries out a driving or stopping operation in accordance with the position of a shift lever is provided with a controller for controlling permission of actuation of a driving source of the vehicle when the shift lever is moved from a first position indicating stop to another position.

The control device is constructed by ECU or the like which is mounted in a vehicle, for example. A so-called parking position (a position represented by "P") or the like can be adopted as the first position indicating the stop of the shift lever, for example. Furthermore, when the vehicle is a passenger car or the like, an engine or the like can be adopted as the driving source.

Accordingly, with respect to the vehicle which carries out the driving or stopping operation in accordance with the position of the shift lever, permission of actuation of the driving source thereof can be controlled. Particularly, the permission of the actuation of the driving source can be controlled in accordance with the position of the shift lever. Accordingly, the user (driver) can implement the actuation of the driving source (for example, start of the engine or the like) by merely carrying out a shift operation indispensable for the driving without carrying out the operation of a key cylinder, the press operation of a switch or the like. Furthermore, equipment or unit which is required for the operation of the key cylinder, the press operation of the switch or the like can be eliminated, and thus the overall cost of the system can be reduced.

This control device may further include a fixed wireless communication unit for carrying out wireless communication with a portable wireless communication device carried by a driver who drives the vehicle, and the controller controls the wireless communication between the fixed wireless communication unit and the portable wireless communication device when the shift lever is moved from the position indicating stop to another position, thereby performing certification of the portable wireless communication device. If the certification succeeds, the controller permits the actuation of the driving source, and if the certification fails, the controller prohibits the actuation of the driving source.

The portable wireless communication device is configured with a portable electronic key, etc., for example. The fixed wireless communication unit is configured with a communication unit, etc. mounted in ECU, and specifically it is configured with an LF transmitter, a transmission antenna for the LF transmitter, an UHF receiver, a reception antenna for the UHF receiver, etc.

Accordingly, antitheft action of the vehicle can be performed.

A power supplier for supplying power to power consumption elements is mounted in the vehicle, and a second position indicating supply of power from the power supplier is further provided as a shift lever position, and when the shift lever is moved to the second position, power supply from the power supplier is started.

For example, the power supplier is configured with a battery mounted in the vehicle, a circuit which uses the battery concerned as an input power source and performs necessary voltage conversion, voltage stabilization processing, etc.

Accordingly, the ACC power supplying operation which is carried out by operating a key cylinder can be operated by shift operation. In connection with this, the key cylinder, etc. can be eliminated, and thus the overall cost of the system can be reduced.

A control method according to another aspect of the present invention is a method adapted to the control device according to the aspect of the present invention described above.

As described above, according to the present invention, with respect to a vehicles which is driven or stopped in accordance with the position of a shift lever, permission of the actuation of the driving source thereof can be controlled. Particularly, the permission of the actuation of the driving source can be controlled in accordance with the position of the shift lever. Accordingly, the user (driver) can implement the actuation of the driving source (for example, start of the engine, etc.) by merely carrying out the shift operation indispensable for the driving without carrying out the key cylinder operation, the switch press operation, etc. which have been hitherto necessary. Therefore, equipment and units which are necessary for the key cylinder operation, the switch press operation, etc. can be eliminated, and thus the overall cost of the system can be reduced.

### BRIEF DESCRIPTION OF THE DRAWINGS

Fig. 1 is a diagram showing an example of the construction of an engine start system of a vehicle as a control system to which the present invention is applied.
Fig. 2 is a flowchart showing an example of the engine start processing out of the processing executed by ECU of Fig. 1.
Fig. 3 is a block diagram showing an example of the hardware construction of a computer when a constituent element of the control system to which the present invention is applied is constructed by the computer.

### DESCRIPTION OF THE PREFERRED EMBODIMENTS

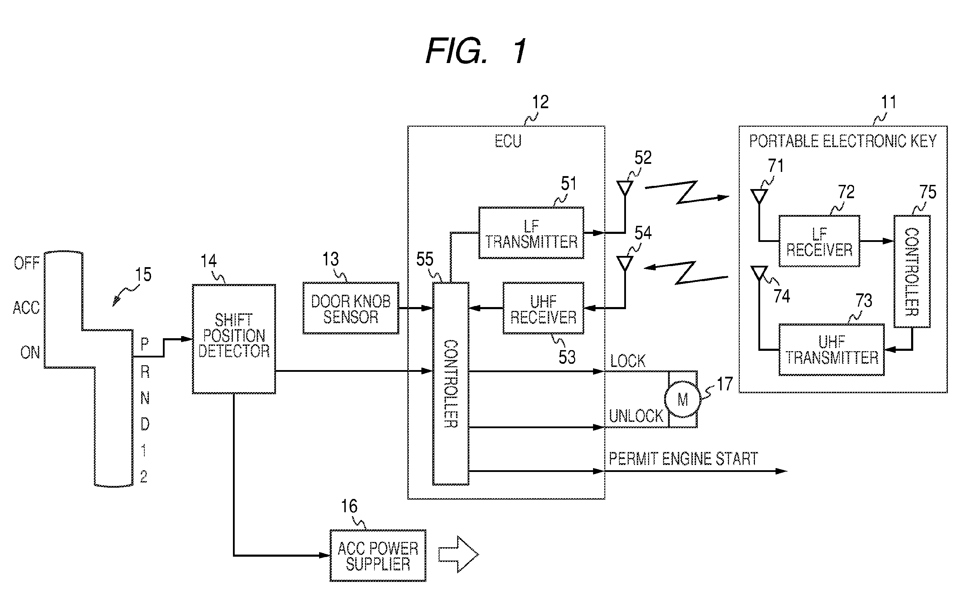

Fig. 1 shows an example of the construction of a vehicle engine start system as an embodiment of a control system to which the present invention is applied.

In the example of Fig. 1, the vehicle engine start system contains elements from a portable electronic key 11 to a motor 17.

The portable electronic key 11 is carried out by a user who mainly drives a vehicle, and it is used to open/close the doors of the vehicle, start the engine of the vehicle, etc.

Elements from ECU (Electronic Control Unit: Electronic Control Unit) 12 to the motor 17 are mounted in the vehicle.

In the example of Fig. 1, ECU 12 is configured with an LF transmitter 51, a UHF receiver 53 and a controller 55.

Furthermore, a door knob sensor 13 and a shift position detector 14 are connected to the controller 55 of ECU 12.

The door knob sensor 13 is constructed as a sensor for detecting the body of a user (for example, a hand or a finger) who approaches or comes into contact with a door knob or the vicinity thereof to operate the door knob of the vehicle, for example, as a proximity switch. Here, another sensor (for example, door knob actuation sensor) may be provided in place of the door knob sensor 13 or in addition to the door knob sensor 13. The door knob actuation sensor is some sensor which outputs a detection signal when the door knob is pulled.

The shift position detector 14 detects the position at which the shift lever 15 exists (hereinafter referred to as shift position), and notifies the detection result to the controller 55.

The detection method of the shift position detector 14 and the notifying method (output method) of the detection result are not limited to specific ones. That is, the detection method and the notifying method are freely selectable by a designer or the like, and the shift position detector 14 may be constructed so as to be applicable to the selected detection method and notifying method.

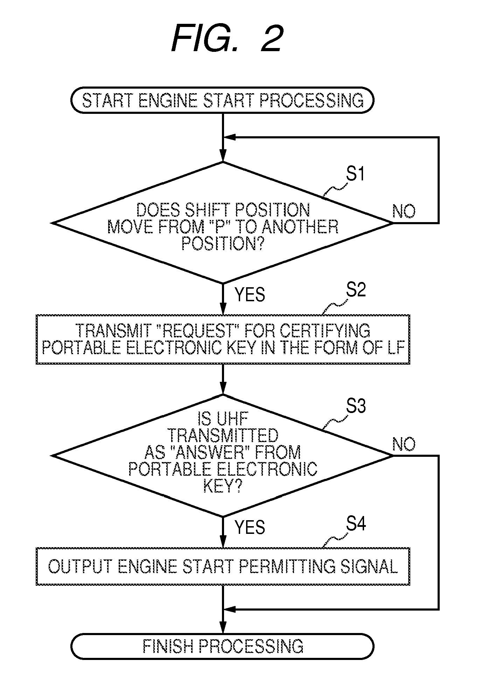

For example, the shift position detector 14 may be constructed as a switch which is set to ON-state (or OFF-state) when the shift lever 15 exists at a predetermined shift position, and to OFF-state (or ON-state) in the other cases. This switch may be provided to all the shift positions, or it may be provided to only a shift position to which attention is paid in the control processing of the controller 55. For example, when the control processing of the controller 55 is limited to the engine starting processing in an example shown in Fig. 2 which will be described later, only "P" (parking position) in step S1 may be detected as the shift position. Accordingly, nothing is needed insofar as only the switch corresponding to "P" exists.

For example, the shift position detector 14 may be constructed as a sensor for detecting the distance, angle or other physical quantities of the shift lever 15. In this case, the sensor may be designed so as to directly output the detected physical quantity itself and the controller 55 may recognize the shift position on the basis of the detected physical quantity. Or, the sensor may convert the detected physical quantity to the corresponding shift position, and then output the shift position to the controller 55.

According to this embodiment, as the shift position of the shift lever 15 as described above exist a parking position (hereinafter referred to as "P"), a reverse position (hereinafter referred to as "R"), a neutral position (hereinafter referred to as "N") , a drive position (hereinafter referred to as "D"), a low position (hereinafter referred to as "1", and a second position (hereinafter referred to as "2") .

That is, the user operates the shift lever 15 to move the shift lever to a proper position, whereby the vehicle can be driven. However, in order to drive the vehicle, the engine has to be first started. In this case, as described above, it has been hitherto required for the user to check whether the shift lever 15 is located at "P" and carry out an operation of inserting a mechanical key into a key cylinder and then rotating the mechanical key, pressing a push switch for starting the engine or the like. That is, the user carries out an operation of moving the shift lever 15 from "P" to another position (for example, "1" or the like) after starting the engine through the operation as described above, and steps on an accelerator (not shown) by a foot or the like, thereby starting movement of the vehicle.

On the other hand, according to this embodiment, when the shift position of the shift lever 15 is moved from "P" to another position (for example, "1" or the like), this movement is detected by the shift position detector 14, the certification processing on the portable electronic key 11 is carried out on the basis of the control of the controller 55, and then an engine start permitting signal is output from the controller 55, whereby the engine of the vehicle is started. That is, the user does not carry out any operation other than the operation of moving the shift position of the shift lever 15 from "P" to another position (for example, "1" or the like) to start the engine.

As described above, according to this embodiment, the engine is started by only the shift operation which is indispensable for the driving, and thus the conventional operation can be omitted while reflecting a user's clear intention. That is, there can be obtained such an effect that the operation of the key cylinder and the press operation of the push switch as described above can be omitted.

Furthermore, the operation of the key cylinder and the press operation of the push switch can be omitted, and this brings an effect of making it possible to reduce equipment and units necessary for these operations.

A detailed example of the processing of ECU 12 for starting the engine as described above will be described later with reference to the flowchart of Fig. 2.

In this embodiment, "OFF" "ACC" "ON" etc. which exist in the conventional key cylinder exist as the shift positions. Accordingly, various kinds of operations which have been hitherto performed by the operation of inserting the mechanical key into the key cylinder and rotating the inserted mechanical key to move the shift position to any position of "OFF", "ACC" and "ON" can be implemented by the operation of moving the shift position of the shift lever 15 to the corresponding position. Specifically, when the user moves the shift position of the shift lever 15 to "ACC", this movement is detected by the shift position detector 14, and supply of so-called ACC power from the ACC power source supplier 16 is started.

In the example of Fig. 1, in order to start the supply of the ACC power, the shift position detector 14 is required to detect "ACC". However, when the shift position detector 14 itself is designed so that it is supplied with power from the ACC power source to operate, a mechanical switch or the like may be provided at the position of "ACC" of the shift lever 15, and the switch concerned and the ACC power source supplier 16 may be directly wired to each other or the like, whereby the supply of the ACC power is started from the ACC power supplier 16 when the shift position of the shift lever 13 is moved to "ACC".

The LF transmitter 51 is connected to the controller 55 of ECU 12. An antenna 52 is connected to the LF transmitter 51. That is, the LF transmitter 51 transmits information supplied from the controller 55, for example, a "request" or the like for certifying the portable electronic key 11 from the antenna 52 in an LF (Low Frequency) style.

The UHF receiver 53 is connected to the controller 55 of ECU 12. An antenna 54 is connected to the UHF receiver 53. That is, the UHF receiver 53 receives information transmitted from the portable electronic key 11 in a UHF (Ultra High Frequency) style, for example, an "answer" corresponding to the "request" described above through the antenna 54, converts the information concerned to a suitable format and then supplies it to the controller 55.

The term "request" used in this specification is a radio signal which is transmitted from a fixed wireless communication device (ECU 12 in this embodiment), and has a function of making the portable wireless communication device transmit a signal on the basis of reception of this "request" by the portable wireless communication device (the portable electronic key 11 in this embodiment) existing in a communication range. The term "answer" is a radio signal which is transmitted from the portable wireless communication device on the basis of the reception of the "request". The function of "answer" may be a function of merely indicating that the request is received, or may make a request for some operation to the fixed wireless communication device or make the fixed wireless communication device execute some operation. The "answer" may contain ID of each wireless communication device, position information of the portable wireless communication device, a code for requesting an operation on the vehicle or the fixed wireless communication device, etc.

Furthermore, a motor 17 is connected to the controller 55 of ECU 12. The motor 17 is a motor serving as a driving source for a locking device of the vehicle doors, that is, a door lock actuator.

As not shown, the controller 55 is configured with a storage unit for storing various kinds of information, a microcomputer for controlling the whole of ECU 12 and executing necessary information processing, etc. Here, the storage unit (not shown) comprises a writable and erasable non-volatile memory, more specifically EEPROM (Electrically Erasable Programmable Read-only Memory), for example.

This controller 55 controls execution of control processing for starting the engine as described above (hereinafter referred to as engine starting processing). The details of the engine starting processing will be described later with reference to Fig. 2.

When the detection signal of the door knob sensor 13 is input, the controller 55 transmits "request" from the antenna 52. When "answer" from the portable electronic key 11 can be received, the motor 58 is driven to unlock the doors.

The ACC power supplier 16 has a circuit which uses a battery (not shown) mounted in the vehicle as an input power source and executes necessary voltage conversion, stabilization processing, etc. The ACC power supplier 16 basically supplies power to the power consumption elements of ECU 12 at all times. Here, the power consumption elements are the LF transmitter 51, the UHF receiver 53 and the controller 55 in the example of Fig. 1. Furthermore, the shift position detector 14, etc. may be power consumption elements as described above.

The portable electronic key 11 in the example of Fig. 1 is configured to contain elements from an antenna 71 to a controller 75.

An LE receiver 72 converts LF received by the antenna 71 to information of a proper format and supplies the information concerned to the controller 75. Here, the information received in the form of LF by an antenna 74 contains the "request" from ECU 12 described above, etc.

The UHF transmitter 73 transmits the information supplied from the controller 75 in the form of UHF from the antenna 74. Here, the information supplied from the controller 75 contains the "answer" to ECU 12, etc.

The controller 75 is configured with a storage unit for storing various kinds of information, a microcomputer for controlling the overall portable electronic key 11 and executing necessary information processing, etc. (not shown). Here, the storage unit (not shown) comprises a writable and erasable non-volatile memory, more specifically EEPROM, for example.

In addition, the portable electronic key 11 is provided with a battery, for example. Power is basically supplied from this battery to the power consumption elements of the portable electronic key 11 at all times. Here, the power consumption elements contain the LF receiver 72, the UHF transmitter 73 and the controller 75 in the example of Fig. 1. The mechanical key as described above is detachably provided to the portable electronic key 11 as occasion demands.

An example of the engine starting processing by ECU 12 of Fig. 1 will be described with reference to the flowchart of Fig. 2.

In step S1, ECU 12 judges whether the shift position is moved from "P" to a position other than "P".

That is, the shift position of the shift lever 15 is detected by the shift position detector 14, and supplied to the controller 55 of ECU 12. The controller 55 grasps the shift position of the shift lever 15 on the basis of the detection result of the shift position detector 14 at all times.

NO is judged in the processing of step S1 during the period from the time when the user sets the shift lever 15 to "P" until the time when the operation of moving the shift lever 15 to another position (for example, "1" or the like), and the judgment processing of step S1 is executed again.

Thereafter, when the user carries out the operation of moving the shift lever 15 to another position (for example, "1" or the like) after the movement of the shift lever 15 to "P", YES is judged in the processing of step S1, and the processing goes to step S2.

In step S2, ECU 12 transmits "request" for certifying the portable electronic key 11 in the form of LF.

In step S3, ECU 12 judges whether UHF as "answer" is received from the portable electronic key.

If no "answer" is transmitted from the portable electronic key 11, NO is judged in the processing of step S3, and the engine starting processing is finished. In this case, the engine of the vehicle is not started.

On the other hand, if "answer" is transmitted from the portable electronic key 11, YES is judged in the processing of step S3, and the processing goes to step S4. In step S4, ECU 12 outputs an engine start permitting signal. Accordingly, the engine start processing is finished, and the engine of the vehicle is started in response to the output of the engine start permitting signal.

The engine start processing will be further described hereunder from a viewpoint of the user's (driver's) operation.

That is, the user first sits down in the driver's seat of the vehicle, and steps on a foot brake (not shown). At this time, the state of a parking brake (not shown) is set to ON-state, the shift position of the shift lever 15 is set to "P", and the opening degree of an accelerator (not shown) is set to 0%.

During this time period, the loop processing of judging NO in the processing of step S1 is executed in ECU 12.

Next, the user presses a shift button (not shown) of the shift lever 15, and moves the shift position from "P" to another position (for example, "1" or the like).

At this time, in ECU 12, YES is judged in the processing of step S1, and the portable electronic key 11 is certified in the processing from the step S2 to the step S3. If the certification succeeds, the engine start permitting signal is output from ECU 12 in the processing of step S4, whereby the engine is started.

As described above, for the user, the engine starting processing is executed at ECU 12 side by executing only the operation of moving the shift position of the shift lever 15 from "P" to another position (for example, "1" or the like), and the engine is started.

That is, in this embodiment, the engine is started by only the shift operation indispensable for driving, and this brings an effect that the conventional operations, that is, the operation of the key cylinder and the press operation of the push switch can be omitted while reflecting the user's clear intention.

Furthermore, the omission of the operation of the key cylinder and the press operation of the push switch brings an effect of making it possible to reduce equipment and units necessary for these operations.

The series of processing described above (or some processing thereof), for example, the processing based on at least a part of the flowchart of Fig. 2 described above may be executed by hardware or executed by software.

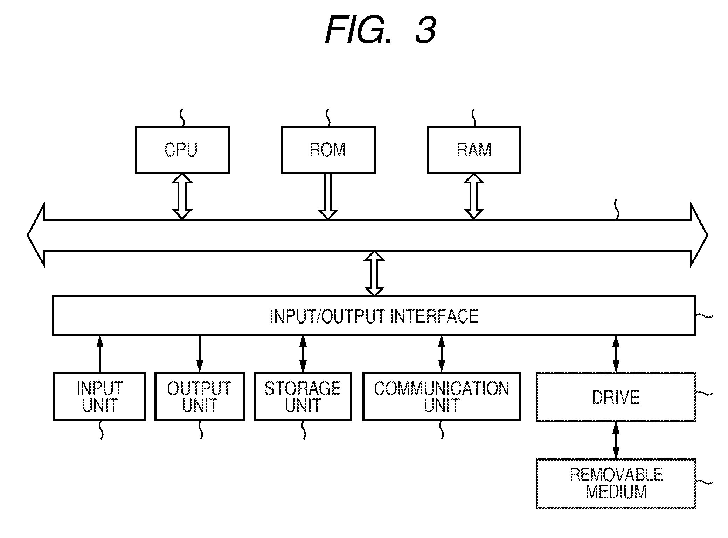

When the series of processing (or some processing thereof) is executed by software, ECU 12 or a part thereof may be constructed by a computer as shown in Fig. 3, for example.

In Fig. 3, CPU (Central Processing Unit) 101 executes various kinds of processing according to a program recorded in ROM (Read Only Memory) 102 or a program loaded from the storage unit 108 to RAM (Random Access Memory) 103. Data necessary to execute various kinds of processing by CPU 101 are also stored in RAM 103.

CPU 101, ROM 102 and RAM 103 are mutually connected to one another through a bus 104. An input/output interface 105 is also connected to the bus 104.

An input unit 106 comprising a keyboard, a mouse, etc., an output unit 107 comprising a display or the like, the storage unit 108 comprising a hard disc or the like and a communication unit 19 comprising a modem, a terminal adaptor, etc. are connected to the input/output interface 105. The communication unit 109 executes communication processing with other devices through a network containing the Internet. Furthermore, the communication unit 109 executes transmission/reception processing with the portable electronic key 11 through an antenna (not shown). That is, the communication unit 109 transmits the "request" described above to the portable electronic key 11 and receives the "answer" from the portable electronic key 11.

A drive 110 is connected to the input/output interface 105 as occasion demands, and a removable medium 111 such as a magnetic disc, an optical disk, a magnetooptic disc, a semiconductor memory or the like is properly mounted in the drive 110. A computer program read out from the removable medium 111 is installed into the storage unit 108 as occasion demands.

When the series of processing is executed by software, a program constituting the software is installed from a network or a recording medium into a computer installed in an dedicated hardware, a general-purpose personal computer which can execute various kinds of functions by installing various kinds of programs, etc.

As shown in Fig. 3, the recording medium containing the program as described above is constructed not only by a removable medium (package medium) 111 such as a magnetic disc (containing a floppy disk), an optical disk (containing CD-ROM (Compact Disk-Read Only Memory) , DVD (Digital Versatile Disk) ) , a magnetooptic disk (containing MD (Mini-Disk)), a semiconductor memory or the like which is recorded with a program to be distributed to supply the program to users separately from the main body of the device, but also by ROM 102 which is supplied to users while installed in the main body of the device in advance and the program is recorded, a hard disk contained in the storage unit 108 or the like.

In this specification, the steps of describing the program recorded in a recording medium contain not only the processing which is time-serially executed in sequence, but also the processing which is executed in parallel or individually although the processing is not time-serially executed.

Furthermore, the system to which the present invention is applied is not limited to a system mounted in a vehicle, but it may be applied to an object which is driven and stopped by shift operation, for example, a system mounted in a carriage, equipment or the like. Here, the system represents all kinds of apparatuses constructed by plural processing devices or processors.

For example, ECU 12 described above is mounted in a vehicle having a shift lever 15 (four-wheel car, two-wheel vehicle). However, it may be mounted in a carriage such as a small plane or the like, a machine, equipment, a structure, facilities or the like. Furthermore, the start of the engine is adopted as the operation after certification in the example described above. However, various kinds of operations such as actuation of mount objects other than the engine, permission of the actuation, etc. may be adopted. Here, the mount objects other than the engine may be a driving source such as a motor or the like, a driving mechanism such as a transmission or the like, an air conditioner, an audio, a navigation system, an illumination lamp, etc.

## Claims

1. A control device mounted in a vehicle which is driven or stopped in accordance with the position of a shift lever, comprising a controller for controlling permission of actuation of a driving source of the vehicle when the shift lever is moved from a first position indicating stop to another position.

2. The control device according to claim 1, further comprising a fixed wireless communication unit for carrying out wireless communication with a portable wireless communication device carried by a driver who drives the vehicle, wherein the controller controls the wireless communication between the fixed wireless communication unit and the portable wireless communication device when the shift lever is moved from the position indicating stop to another position, thereby performing certification of the portable wireless communication device, permits the actuation of the driving source if the certification succeeds, and prohibits the actuation of the driving source if the certification fails.

3. The control device according to claim 1, wherein a power supplier for supplying power to power consumption elements is mounted in the vehicle, a second position indicating supply of power from the power supplier is further provided as a shift lever position, and when the shift lever is moved to the second position, power supply from the power supplier is started.

4. A control method of a control device mounted in a vehicle which is driven or stopped in accordance with the position of a shift lever, comprising: starting the operation of a driving source of the vehicle when the shift lever is moved from a first position indicating stop to another position.
